# EUROPÄISCHE PATENTSCHRIFT

(11) **EP 2 340 269 B1**
(45) Veröffentlichungstag und Bekanntmachung des Hinweises auf die Patenterteilung: **05.09.2012**
(21) Anmeldenummer: 09783986.4
(22) Anmeldetag: 13.10.2009
(51) Int. Cl.: C08G 18/42, C08G 63/48, C08J 9/00, C08G 18/40

(54) **POLYESTERPOLYOLE AUF BASIS VON TEREPHTHALSÄURE**
TEREPHTHALIC ACID-BASED POLYESTER POLYOLS
POLYESTER POLYOLS À BASE D'ACIDE TÉRÉPHTALIQUE

(30) Priorität: 15.10.2008 EP 08166708
(43) Veröffentlichungstag der Anmeldung: 06.07.2011
(73) Patentinhaber: BASF SE, 67056 Ludwigshafen (DE)
(72) Erfinder: GEHRINGER, Lionel, F-67470 Schaffhouse-pres-Seltz (FR); KAMPF, Gunnar, 32351 Stemwede-Haldem (DE); TISCHER, Gerlinde, 01945 Ruhland (DE)
(86) Internationale Anmeldenummer: PCT/EP2009/063358
(87) Internationale Veröffentlichungsnummer: WO 2010/043624

(56) Entgegenhaltungen:
- EP-A1- 0 798 325
- WO-A1-00/58383
- WO-A1-99/42508
- US-A1- 2007 225 392

## Beschreibung

Die Erfindung betrifft Polyesterpolyole auf Basis von Terephthalsäure und deren Verwendung zur Herstellung von Polyurethanhartschaumstoffen.

Die Herstellung von Polyurethanhartschaumstoffen durch Umsetzung von organischen oder modifizierten organischen Di- oder Polyisocyanaten mit höhermolekularen Verbindung mit mindestens zwei reaktiven Wasserstoffatomen, insbesondere mit Polyetherpolyolen aus der Alkylenoxidpolymerisation oder Polyesterpolyolen aus der Polykondensation von Alkoholen mit Dicarbonsäuren in Gegenwart von Polyurethankatalysatoren, Kettenverlängerungs- und/oder Vernetzungsmitteln, Treibmitteln und weiteren Hilfs- und Zusatzstoffen ist bekannt und wird in zahlreichen Patent- und Literaturveröffentlichungen beschrieben.

Beispielhaft genannt sei das Kunststoffhandbuch, Band VII, Polyurethane, Carl-Hanser-Verlag, München, 1. Auflage 1966, herausgegeben von Dr. R. Vieweg und Dr. A. Höchtlen, sowie 2. Auflage 1983 und 3. Auflage 1993, herausgegeben von Dr. G. Oertel. Durch geeignete Wahl der Aufbaukomponenten und ihrer Mengenverhältnisse können Polyurethanschaumstoffe mit sehr guten mechanischen Eigenschaften hergestellt werden.

Bei Einsatz von Polyesterpolyolen ist es üblich, Polykondensate aus aromatischen und/oder aliphatischen Dicarbonsäuren und Alkandiolen und/oder -triolen bzw. Etherdiolen einzusetzen. Es ist aber auch möglich, Polyesterabfälle und hier insbesondere Polyethylenterephthalat (PET)- bzw. Polybutylenterephthalat (PBT)-Abfälle zu verarbeiten. Hierfür sind eine ganze Reihe von Verfahren bekannt und beschrieben. Grundlage einiger Verfahren ist die Umwandlung des Polyesters in einen Diester der Terephthalsäure, z.B. in Dimethylterephthalat. In DE-A 1003714 bzw. US-A 5,051,528 werden derartige Umesterungen unter Einsatz von Methanol und Umesterungskatalysatoren beschrieben.

US 2007/0225392 beschreibt die Herstellung von Polyesterpolyolen aus Diethylenglykol, Triethylenglykol, Tetraethylenglykol, Terephthalat, Pentaerytrhitol und Mais Öl. Das Kg Polyesterpolyolenthält 300 mmol Pentaerythritol.

WO 99/42508 offenbart die Herstellung von Polyesterpolyolen aus Phtalsäureanhydrid, DEG, Pentaerythritol und Sojabohnenöl. Das Kg Polyesterpolyol enthält 160 mmol Pentaerythritol.

Ferner ist bekannt, dass Terephthalsäure-basierte Ester bezüglich des Brandverhaltens Phthalsäure-basierten Estern überlegen sind. Nachteilig ist jedoch die hohe Auskristalliersierungsneigung und somit geringe Lagerstabilität von Terephthalsäure-basierten Estern.

Um die Lagerstabilität der Terephthalsäure-basierten Polyesterpolyole, welche zu schnellem Auskristallisieren neigen, zu erhöhen, werden üblicherweise aliphatische Dicarbonsäuren zugegeben. Diese wirken sich jedoch negativ auf das Brandverhalten (Flammfestigkeit) der mit diesen hergestellten Polyurethanschaumstoffen aus.

Aufgabe der Erfindung ist es, Polyesterpolyole auf Basis von Terephthalsäure oder Terephthalsäure-Derivativen bereitzustellen, welche eine verbesserte Lagerstabilität aufweisen. Aufgabe der Erfindung ist es ferner, Polyesterpolyole mit verbesserter Lagerstabilität bereitzustellen, welche Polyurethanschaumstoffe mit verbessertem Brandverhalten ergeben.

Gelöst wird die Aufgabe durch ein Polyesterpolyol enthaltend das Veresterungsprodukt von
a) 10 bis 70 Mol-%, vorzugsweise 20 bis 70 Mol-% und besonders bevorzugt 25 bis 50 Mol-% einer Dicarbonsäurezusammensetzung, enthaltend
   a1) von 50 bis 100 Mol-% eines Materials auf Basis von Terephthalsäure, ausgewählt aus Terephthalsäure, Dimethylterephthalat, Polyalkylenterephthalat und deren Gemischen,
   a2) 0 bis 50 Mol-% Phthalsäure, Phthalsäureanhydrid oder Isophthalsäure,
   a3) 0 bis 50 Mol-% einer oder mehrerer Dicarbonsäuren,
b) 2 bis 30 Mol-%, vorzugsweise 3 bis 20 Mol-%, besonders bevorzugt 4 bis 15 Mol% einer oder mehrerer Fettsäuren und/oder Fettsäurederivate und/oder Benzoesäure,
c) 10 bis 70 Mol-%, vorzugsweise 20 bis 60 Mol-%, besonders bevorzugt 25 bis 55 Mol-% eines oder mehrerer aliphatischer oder cycloaliphatischer Diole mit 2 bis 18 C-Atomen oder Alkoxylate derselben,
d) 2 bis 50 Mol-%, vorzugsweise 2 bis 40 Mol-%, besonders bevorzugt 2 bis 35 Mol% eines höherfunktionellen Polyols, ausgewählt aus der Gruppe bestehend aus Glycerin, alkoxyliertem Glycerin, Trimethylolpropan, alkoxyliertem Trimethylolpropan, Pentaerythritol und alkoxyliertem Pentaerythritol,
wobei pro kg Polyesterpolyol mindestens 800 mmol an Polyolen d) mit einer OH-Funktionalität von ≥ 2,9 umgesetzt werden.

Vorzugsweise enthält die Dicarbonsäurezusammensetzung a) mehr als 50 Mol-% des Terephthalsäure-basierten Materials a1), vorzugsweise mehr als 75 Mol-% und besonders bevorzugt 100 Mol-% des Terephthalsäure-basierten Materials a1). Vorzugsweise ist das aliphatische Diol ausgewählt aus der Gruppe bestehend aus Ethylenglykol, Diethylenglykol, Polyethylenglykol, Propylenglykol, 1,3-Propandiol, 1,4-Butandiol, 1,5-Pentandiol, 1,6-Hexandiol, 2-Methyl-1,3-propandiol, 3-Methyl-1,5-Pentandiol und Alkoxylaten derselben, insbesondere Ethoxylaten derselben. Insbesondere ist das aliphatische Diol Diethylenglykol.

Vorzugsweise ist die Fettsäure oder das Fettsäurederivat b) eine Fettsäure oder ein Fettsäurederivat auf Basis nachwachsender Rohstoffe, ausgewählt aus der Gruppe bestehend aus Rizinusöl, Polyhydroxyfettsäuren, Ricinolsäure, Hydroxyl-modifizierten Ölen, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Myristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

Die Veresterung bzw. Umesterung erfolgt unter üblichen Veresterungs- bzw. Umesterungsbedingungen. Hierzu werden die aromatischen und aliphatischen Dicarbonsäuren bzw. Dicarbonsäureester und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u. a. in der Schmelze bei Temperaturen von 150 bis 260°C, vorzugsweise 180 bis 250°C gegebenenfalls unter vermindertem Druck umgesetzt, wobei der durch die Umesterung freigesetzte niedermolekulare Alkohol (beispielsweise Methanol), vorzugsweise bei verringertem Druck, abdestilliert wird. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Umesterung kann auch in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Die Erfindung betrifft auch ein Verfahren zur Herstellung von Polyurethanhartschaumstoffen durch Umsetzung von
A) organischen und/oder modifizierten organischen Di- und/oder Polyisocyanaten mit
B) den erfindungsgemäßen speziellen Polyesterpolyolen, wobei die Komponente B) bis zu 50 Gew.-% weitere Polyesterpolyole aufweisen kann,
C) gegebenenfalls Polyetherolen und/oder weiteren Verbindungen mit mindestens zwei gegenüber Isocyanaten reaktiven Gruppen und gegebenenfalls Kettenverlängerungs- und/oder Vernetzungsmittel,
D) Treibmitteln,
E) Katalysatoren, sowie gegebenenfalls
F) weiteren Hilfsmitteln und/oder Zusatzstoffen,
G) Flammschutzmitteln.

Zur Herstellung der Polyurethanhartschaumstoffe nach dem erfindungsgemäßen Verfahren finden, neben den oben beschriebenen speziellen Polyesterpolyolen, die an sich bekannten Aufbaukomponenten Verwendung, zu denen im Einzelnen folgendes auszuführen ist.

Als organische und/oder modifizierte organische Polyisocyanate A) kommen die an sich bekannten aliphatischen, cycloaliphatischen, araliphatischen und vorzugsweise die aromatischen mehrwertigen Isocyanate in Frage.

Im Einzelnen seien beispielhaft genannt: Alkylendiisocyanate mit 4 bis 12 Kohlenstoffatomen im Alkylenrest, wie 1,12-Dodecandiioscyanat, 2-Ethyltetramethylendiisocyanat-1,4, 2-Methylpentamethylendiisocyanat-1,5, Tetramethylendiisocyanat-1,4, und vorzugsweise Hexamethylendiisocyanat-1,6; cycloaliphatische Diisocyanate wie Cyclohexan-1,3- und 1,4-diisocyanat sowie beliebige Gemische dieser Isomeren, 1-Isocyanato-3,3,5-trimethyl-5-isocyanatomethylcyclohexan (IPDI), 2,4- und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische, und vorzugsweise aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 2,4'-, 2,4'- und 2,2'-Diphenylmethandiisocyanaten und Polyphenylpolymethylenpolyisocyanaten (Roh-MDI) und Mischungen aus Roh-MDI und Toluylendiisocyanaten. Die organischen Di- und Polyisocyanate können einzeln oder in Form ihrer Mischungen eingesetzt werden.

Bevorzugte Di- und Polyisocyanate sind Toluylendiisocyanat (TDI), Diphenylmethandiisocyanat (MDI) und insbesondere Gemische aus Diphenylmethandiisocyanat und Polyphenylenpolymethylenpolyisocyanaten (Polymer-MDI oder PMDI).

Häufig werden auch so genannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion-, Carbamat-, und/oder Urethangruppen enthaltende Di- und/oder Polyisocyanate.

Zur Herstellung von Polyurethan-Hartschaumstoffen wird ganz besonders bevorzugt Polymer-MDI eingesetzt.

Im Stand der Technik ist es gegebenenfalls üblich, Isocyanuratgruppen in das Polyisocyanat einzubauen. Hierfür werden bevorzugt Isocyanuratgruppen bildende Katalysatoren, beispielsweise Alkalimetallsalze alleine oder in Kombination mit tertiären Aminen eingesetzt. Die Isocyanurat-Bildung führt zu flammwidrigen Polyisocyanurat-Schaumstoffen (PIR-Schaumstoffen), welche bevorzugt im technischen Hartschaum, beispielsweise im Bauwesen als Dämmplatte oder Sandwichelemente, eingesetzt werden.

Geeignete weitere Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythritol. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 260°C, vorzugsweise 180 bis 250°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den oben genannten Temperaturen bis zu einer Säurezahl von 80 bis 20, vorzugsweise 40 bis 20, unter Normaldruck und anschließend unter einem Druck von kleiner als 500 mbar, vorzugsweise 40 bis 200 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1:1 bis 2,1, vorzugsweise 1:1,05 bis 1,9, polykondensiert.

Die erhaltenen Polyesterpolyole besitzen vorzugsweise eine Funktionalität von 2 bis 4, insbesondere 2 bis 3, und ein Molekulargewicht von 300 bis 3000, vorzugsweise 400 bis 1000 und insbesondere 450 bis 800.

Mit verwendet werden können auch Polyetherpolyole, die nach bekannten Verfahren, beispielsweise durch anionische Polymerisation mit Alkalihydroxiden, wie z.B. Natrium-oder Kaliumhydroxid oder Alkalialkoholaten, wie z.B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzug ist Ethylenoxid.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diaminodiphenylmethan.

Als Startermoleküle kommen ferner in Betracht: Alkanolamine, wie z.B. Ethanolamin, N-Methyl- und N-Ethylethanolamin, Dialkanolamine, wie z.B. Diethanolamin, N-Methyl-und N-Ethyldiethanolamin, und Trialkanolamine, wie z.B. Triethanolamin, und Ammoniak. Vorzugsweise verwendet werden zwei oder mehrwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Ethylendiamin, Sorbit und Saccharose.

D i e Polyetherpolyole, vorzugsweise Polyoxypropylen- und Polyoxypropylenpolyoxyethylenpolyole, besitzen eine Funktionalität von vorzugsweise 2 bis 6 und insbesondere 2 bis 5 und Molekulargewichte von 300 bis 3000, vorzugsweise 300 bis 2000 und insbesondere 400 bis 1000.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyetherpolyolen analog den Angaben der deutschen Patentschriften 11 11 394, 12 22 669 (US 3,304,273, 3,383,351, 3,523,093), 11 52 536 (GB 10 40 452) und 11 52 537 (GB 987,618) hergestellt werden, sowie Polyetherpolyoldispersionen, die als disperse Phase, üblicherweise in einer Menge von 1 bis 50 Gew.-%, vorzugsweise 2 bis 25 Gew.-%, enthalten: z.B. Polyharnstoffe, Polyhydrazide, tert.-Aminogruppen gebunden enthaltende Polyurethane und/oder Melamin und die z.B. beschrieben werden in der EP-B 011 752 (US 4,304,708), US-A,4,374,209 und DE-A,32 31 497.

Die Polyetherpolyole können ebenso wie die Polyesterpolyole einzeln oder in Form von Mischungen mit verwendet werden. Ferner können sie mit den Pfropfpolyetherpolyolen oder Polyesterpolyolen sowie den hydroxylgruppenhaltigen Polyesteramiden, Polyacetalen, Polycarbonaten und/oder Polyetherpolyaminen gemischt werden.

Als hydroxylgruppenhaltige Polyacetale kommen z.B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

Geeignete Polyetherpolyamine können aus den oben genannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils (US 3 267 050) oder die teilweise oder vollständige Aminierung von Polyoxyalkylenpolyolen mit Aminen oder Ammoniak in Gegenwart von Wasserstoff und Katalysatoren (DE 12 15 373).

Die Polyurethanhartschaumstoffe können unter Mitverwendung von Kettenverlängerungs- und/oder Vernetzungsmitteln C) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden Diole und/oder Triole mit Molekulargewichten kleiner als 400, vorzugsweise von 60 bis 300. In Betracht kommen beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxycyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Als weitere Verbindungen C) mit mindestens zwei gegenüber Isocyanat reaktiven Gruppen, also mit mindestens zwei mit Isocyanatgruppen reaktiven Wasserstoffatomen, kommen insbesondere solche in Frage, die zwei oder mehrere reaktive Gruppen, ausgewählt aus OH-Gruppen, SH-Gruppen, NH-Gruppen, NH₂-Gruppen und CHaciden Gruppen, wie z.B. ß-Diketo-Gruppen, aufweisen.

Sofern zur Herstellung der Polyurethanhartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 0,5 bis 5 Gew.%, bezogen auf das Gewicht der Komponente B), zum Einsatz.

Zu Treibmitteln D), welche zur Herstellung der Polyurethanhartschaumstoffe verwendet werden, gehören vorzugsweise Wasser, Ameisensäure und Gemische daraus. Diese reagieren mit Isocyanatgruppen unter Bildung von Kohlendioxid und im Falle von Ameisensäure zu Kohlendioxid und Kohlenstoffmonoxid. Daneben können physikalische Treibmittel wie niedrig siedende Kohlenwasserstoffe eingesetzt werden. Geeignet sind Flüssigkeiten, welche gegenüber den organischen, gegebenenfalls modifizierten Polyisocyanaten inert sind und Siedepunkte unter 100 °C, vorzugsweise unter 50 °C bei Atmosphärendruck aufweisen, so dass sie unter dem Einfluss der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen.

Vorzugsweise Verwendung finden Wasser, Ameisensäure, Chlordifluormethan, Chlordifluorethane, Dichlorfluorethane, Pentangemische, Cyclohexan und Mischungen aus mindestens zwei dieser Treibmittel, z.B. Mischungen aus Wasser und Cyclohexan, Mischungen aus Chlordifluormethan und 1-Chlor-2,2-difluorethan und gegebenenfalls Wasser.

Die Treibmittel sind entweder ganz oder teilweise in der Polyolkomponente (d.h. B+C+E+F+G) gelöst oder werden direkt vor dem Verschäumen der Polyolkomponente über einen Statikmischer zudosiert. Für gewöhnlich sind Wasser oder Ameisensäure ganz oder teilweise in der Poyolkomponente gelöst und werden das physikalische Treibmittel (beispielsweise Pentan) und gegebenenfalls der Rest des chemischen Treibmittels "online" dosiert.

Die eingesetzte Menge des Treibmittels bzw. der Treibmittelmischung liegt bei 1 bis 45 Gew.-%, vorzugsweise 1 bis 30 Gew.-%, besonders bevorzugt 1,5 bis 20 Gew.-%, jeweils bezogen auf die Summe der Komponenten B) bis G).

Dient Wasser als Treibmittel, so wird es vorzugsweise der Aufbaukomponente B) in einer Menge von 0,2 bis 5 Gew.-%, bezogen auf die Aufbaukomponente B), zugesetzt. Der Wasserzusatz kann in Kombination mit dem Einsatz der anderen beschriebenen Treibmittel erfolgen.

Als Katalysatoren E) zur Herstellung der Polyurethanhartschaumstoffe werden insbesondere Verbindungen verwendet, die die Reaktion der reaktive Wasserstoffatome, insbesondere Hydroxylgruppen, enthaltenden Verbindungen der Komponente B) und gegebenenfalls C) mit den organischen, gegebenenfalls modifizierten Polyisocyanaten A) stark beschleunigen.

Zweckmäßigerweise verwendet werden basische Polyurethankatalysatoren, beispielsweise tertiäre Amine, wie Triethylamin, Tributylamin, Dimethylbenzylamin, Dicyclohexylmethylamin, Dimethylcyclohexylamin, N,N,N',N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4.Diazabicyclo.(2,2,2).octan(Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin, und Triethylendiamin. Geeignet sind jedoch auch Metallsalze, wie Eisen(II)-chlorid, Zinkchlorid, Bleioctoat und vorzugsweise Zinnsalze, wie Zinndioctoat, Zinndiethylhexoat und Dibutylzinndilaurat sowie insbesondere Mischungen aus tertiären Aminen und organischen Zinnsalzen.

Als Katalysatoren kommen ferner in Betracht: Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-%, Katalysator bzw. Katalysatorkombination, bezogen auf das Gewicht der Komponente B). Es besteht auch die Möglichkeit, die Reaktionen ohne Katalyse ablaufen zu lassen. In diesem Fall wird die katalytische Aktivität von mit Aminen gestarteten Polyolen ausgenutzt. Im Stand der Technik ist es gegebenenfalls üblich, Isocyanuratgruppen in das Polyisocyanat einzubauen. Hierfür werden bevorzugt Isocyanuratgruppen bildende Katalysatoren, beispielsweise Ammoniumionen- oder Alkalimetallsalze alleine oder in Kombination mit tertiären Aminen eingesetzt. Die Isocyanurat-Bildung führt zu flammwidrigen PIR-Schaumstoffen, welche bevorzugt im technischen Hartschaum, beispielsweise im Bauwesen als Dämmplatte oder Sandwichelemente, eingesetzt werden.

Weitere Angaben zu den genannten und weitere Ausgangsstoffe können der Fachliteratur, beispielsweise dem Kunststoffhandbuch, Band VII, Polyurethane, Carl Hanser Verlag München, Wien, 1., 2. und 3. Auflage 1966, 1983 und 1993, entnommen werden.

Der Reaktionsmischung zur Herstellung der Polyurethanhartschaumstoffe können gegebenenfalls noch weitere Hilfsmittel und/oder Zusatzstoffe F) zugesetzt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali-oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 10 Gew.-%, bezogen auf 100 Gew.-% der Komponente B), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten A) bis C), einverleibt, wobei jedoch der Gehalt an Matten, Vliesen und Geweben aus natürlichen und synthetischen Fasern Werte bis 80 Gew.-% erreichen kann.

Als Flammschutzmittel G) können im Allgemeinen die aus dem Stand der Technik bekannten Flammschutzmittel verwendet werden. Geeignete Flammschutzmittel sind beispielsweise nicht einbaubare bromierte Substanzen, bromierte Ester, bromierte Ether (Ixol), oder bromierte Alkohole wie Dibromneopentylakohol, Tribromneopentylalkohol und PHT-4-Diol sowie chlorierte Phosphate wie z.B. Tris-(2-chlorethyl)phosphat, Tris-(2-chlorpropyl)phosphat, Tris(1,3-dichlorpropyl)phosphat, Trikresylphosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Als weitere flüssige Flammschutzmittel können Phosphate oder Phosphonate wie Diethylethanphosphonat (DEEP), Triethylphosphat (TEP), Dimethylpropylphosphonat (DMPP), Diphenylkresylphosphat (DPK) und andere eingesetzt werden.

Außer den bereits genannten Flammschutzmitteln können auch anorganische oder organische Flammschutzmittel, wie roter Phosphor, roten Phosphor enthaltende Zurichtungen, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyurethan-Hartschaumstoffe verwendet werden.

Im Allgemeinen hat es sich als zweckmäßig erwiesen, 5 bis 150 Gew.-%, vorzugsweise 10 bis 100 Gew.-%, der genannten Flammschutzmittel, bezogen auf die Komponente B), zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Hanser-Verlag, München, Wien, 1. und 2. Auflage, 1966 und 1983 zu entnehmen.

Zur Herstellung der erfindungsgemäßen Polyurethanhartschaumstoffe werden die organischen und/oder modifizierten organischen Polyisocyanate A), die speziellen Polyesterpolyole B) und gegebenenfalls Polyetherol und/oder weitere Verbindungen mit mindestens zwei gegenüber Isocyanaten reaktiven Gruppen und gegebenenfalls Kettenverlängerungs- und/oder Vernetzungsmittel C) in solchen Mengen zur Umsetzung gebracht, dass das Äquivalenzverhältnis von NCO-Gruppen der Polyisocyanate A) zur Summe der reaktiven Wasserstoffatome der Komponenten B), gegebenenfalls C) sowie D) bis G) 1 bis 6:1, vorzugsweise 1,1 bis 5:1 und insbesondere 1,2 bis 3,5:1, beträgt.

Die Polyurethanhartschaumstoffe werden vorteilhafter Weise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Die Ausgangskomponenten werden bei einer Temperatur von 15 bis 90°C, vorzugsweise von 20 bis 60°C und insbesondere von 20 bis 35°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde, mechanisch mittels eines Rührers oder einer Rührschnecke durchgeführt werden. Die Formwerkzeugtemperatur beträgt zweckmäßigerweise 20 bis 110°C, vorzugsweise 30 bis 70°C und insbesondere 40 bis 60°C.

Die nach dem erfindungsgemäßen Verfahren hergestellten Polyurethanhartschaumstoffe weisen eine Dichte von 15 bis 300 g/l, vorzugsweise von 20 bis 100 g/l und insbesondere von 25 bis 60 g/l, auf.

Die Erfindung wird durch die nachstehenden Beispiele näher erläutert.

### Beispiele

Es wurden verschiedene Polyesterole hergestellt:

### Allgemeine Arbeitsvorschrift

In einen 4 Liter-Rundkolben, der mit einem mechanischen Rührer, einem Thermometer und einer Destillationskolonne sowie einem Stickstoffeinleitungsrohr ausgestattet war, wurden die Dicarbonsäure, das aliphatische oder cycloaliphatische Diol oder dessen Alkoxylate und das höher funktionelle Polyol gegeben. Nach Zugabe von 40 ppm Titantetrabutylat als Katalysator wird das Gemisch gerührt und auf 240°C erhitzt, wobei freigesetztes Wasser kontinuierlich abdestilliert wird. Die Umsetzung wird bei 200 mbar durchgeführt. Es wird ein Polyesterol mit einer Säurezahl ≤ 1 mg KOH/g erhalten.

### Vergleichsbeispiel 1

Es werden 894,8 g Phthalsäureanhydrid, 597,35 g Ölsäure, 865,51 g Diethylenglykol und 289,31 g Glycerin umgesetzt, wobei nach der allgemeinen Arbeitsvorschrift verfahren wird. Es wird ein Polyesterol mit einer OH-Funktionalität von 2,2 und einer Hydroxylzahl von 259 mg KOH/g erhalten.

### Vergleichsbeispiel 2

Es werden 953,58 g Phthalsäureanhydrid, 545,65 Ölsäure, 884,79 g Diethylenglykol und 266,81 g Glycerin umgesetzt, wobei nach der allgemeinen Arbeitsvorschrift verfahren wird. Es wird ein Polyesterol mit einer OH-Funktionalität von 2,2 und einer Hydroxylzahl von 237 mg KOH/g erhalten.

### Vergleichsbeispiel 3

Es wird ein kommerziell erhältliches, auf Dimethylterephthalat basierendes Polyesterol mit einer Hydroxylzahl von 192 mg KOH/g der Firma Invista (Terate 7541 LO) verwendet.

### Vergleichsbeispiel 4

Es werden 1428,51 g Terephthalsäure, 121,46 g Ölsäure, 1460 g Diethylenglykol und 57,69 g Trimethylolpropan umgesetzt, wobei nach der allgemeinen Arbeitsvorschrift verfahren wird. Es wird ein Polyesterol mit einer OH-Funktionalität von 2,0 und einer Hydroxylzahl von 228 mg KOH/g erhalten.

### Vergleichsbeispiel 5

Es werden 1468,53 g Terephthalsäure, 62,43 g Ölsäure, 1500,9 g Diethylenglykol und 40,7 g Glycerin nach der allgemeinen Arbeitsvorschrift umgesetzt. Es wird ein Polyesterol mit einer OH-Funktionalität von 2,05 und einer Hydroxylzahl von 238 mg KOH/g erhalten.

### Beispiel 1

Es wurden 1188,95 g Terephthalsäure, 404,36 g Ölsäure, 1006,3 g Diethylenglykol und 384,12 g Trimethylolpropan nach der allgemeinen Arbeitsvorschrift umgesetzt. Es wurde ein Polyesterol mit einer OH-Funktionalität von 2,3 und einer Hydroxylzahl von 246 mg KOH/g erhalten.

### Beispiel 2

Es wurden1307,33 g Terephthalsäure, 444,57 g Ölsäure, 897,73 g Diethylenglykol und 362,34 g Glycerin gemäß der allgemeinen Arbeitsvorschrift umgesetzt. Es wurde ein Polyesterol mit einer OH-Funktionalität von 2,5 und einer Hydroxylzahl von 239 mg KOH/g erhalten.

Die Ergebnisse der Bestimmung der Lagerstabilität sind in Tabelle 1 zusammengefasst.

**Tabelle 1:**

| **Polyesterol** | **Triol** | **OH-Zahl** | **Polyolgehalt mit Fn ≥ 2.9 (mmol / kg PESOL)** | **Aussehen** | | |
|---|---|---|---|---|---|---|
| | | **(mg KOH/g)** | | **1 Monat** | **2 Monate** | **3 Monate** |
| Vergleichsbeispiel 4 | Trimethylolpropan | 228 | 172 | Trüb | Trüb | Trüb |
| Vergleichsbeispiel 5 | Glycerin | 239 | 177 | Trüb | Trüb | Trüb |
| Anwendungsbeispiel 1 | Trimethylolpropan | 246 | 1145 | Klar | Klar | Klar |
| Anwendungsbeispiel 2 | Glycerin | 239 | 1578 | Klar | Klar | Klar |

Tabelle 1 zeigt, dass die nach dem erfindungsgemäßen Verfahren hergestellten Polyesterole länger als 3 Monate lagerstabil sind.

### Vergleichsbeispiele 6 und 7 und Beispiele 3 und 4

### Herstellung von Polyurethan-Hartschaumstoffen (Variante 1):

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyolkomponente zu Isocyanatkomponente von 100:190 verschäumt. Dabei wurde jeweils auf eine konstante Abbindezeit von 49 +/- 1 Sekunden sowie eine Gesamtrohdichte von 33 +/- 0,5 g/L eingestellt.

### Polyolkomponente:

79 Gewichtsteile Polyesterol gemäß Beispielen 1 und 2 bzw. Vergleichsbeispielen 1 und 2
6 Gewichtsteile Polyetherol, bestehend aus dem Ether von Ethylenglykol und Ethylenoxid mit einer Hydroxylfunktionalität von 2 und einer Hydroxylzahl von 200 mg KOH/g
13 Gewichtsteile Flammschutzmittel Trischlorisopropylphosphat (TCPP)
2 Gewichtsteile Stabilisator; Tegostab B 8443 (siliconhaltiger Stabilisator)
15 Gewichtsteile Pentan S 80:20
1,5 Gewichtsteile Wasser
1,6 Gewichtsteile Kaliumacetat (47 Gew.-% in Ethylenglycol)
1,2 Gewichtsteile 70 % Bis(2-dimethylaminoethyl)ether

### Isocyanatkomponente:

190 Gewichtsteile Polymer-MDI (Lupranat® M50 der BASF SE, Ludwigshafen, DE).

Die Einstellung der Rohdichte auf 33 +/- 1 g/L erfolgte über den Wassergehalt, die Abbindezeit wurde mittels Variation des Bis(2-dimethylaminoethyl)ether-Gehalts auf 49 +/- 1 s eingestellt.

Die Komponenten wurden wie angegeben miteinander verschäumt. An den erhaltenen Polyurethan-Hartschaumstoffen wurden die Härtung mit dem Bolzentest und die Flammfestigkeit durch Bestimmung der Flammhöhe wie nachstehend beschrieben gemessen.

### Bestimmung der Härtung:

Die Härtung wurde mit dem Bolzentest ermittelt. Dazu wurde 2,5 3, 4, 5, 6 und 7 Minuten nach Vermischung der Komponenten in einem Polystyrol-Becher ein Stahlbolzen mit einer Kugelkalotte von 10 mm Radius mit einer Zug/Druckprüfmaschine 10 mm tief in den entstandenen Schaumpilz eingedrückt. Die dafür erforderliche Maximalkraft in N ist ein Maß für die Härtung des Schaumstoffs. Als Maß für die Sprödigkeit des Polyurethan-Hartschaumstoffes wurde der Zeitpunkt ermittelt, bei dem die Oberfläche des Hartschaumstoffes beim Bolzentest sichtbare Bruchzonen aufwies.

### Bestimmung der Flammfestigkeit:

Die Flammhöhe wurde nach EN ISO 11925-2 gemessen. Die Ergebnisse sind in Tabelle 2 wiedergegeben.

**Tabelle 2**

| | Vergleichsbeispiel 6 | Vergleichsbeispiel 7 | Beispiel 3 | Beispiel 4 |
|---|---|---|---|---|
| Polyesterpolyol aus: | Vergleichsbeispiel 1 | Vergleichsbeispiel 2 | Beispiel 1 | Beispiel 2 |
| Bolzentest [N] nach 3 min. | 39 | 38 | 50 | 53 |
| Bolzentest [N] nach 5 min. | 70 | 71 | 84 | 87 |
| Flammhöhe [cm] | 16 | 18 | 11 | 10 |

Wie der Tabelle 2 entnommen werden kann, weisen die nach dem erfindungsgemäßen Verfahren hergestellten Polyurethan-Hartschaumstoffe ein verbessertes Aushärteverhalten und ein verbessertes Brandverhalten auf.

### Vergleichsbeispiel 8 und Beispiele 5 und 6

### Herstellung von Polyurethan-Hartschaumstoffen (Variante 2):

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:190 verschäumt. Dabei wurde jeweils auf eine konstante Abbindezeit von 49 +/- 1 Sekunden sowie eine Gesamtrohdichte von 41 +/- 1 g/L eingestellt.

### Polyolkomponente:

41,5 Gewichtsteile Polyesterol gemäß Beispielen 1 und 2 bzw. Vergleichsbeispiele 2
20 Gewichtsteile Polyetherol, mit einer OHZ von ~ 490 mg KOH/g hergestellt durch Polyaddition von Propylenoxid an einer Saccharose/Glycerin-Mischung als Startermolekül
6 Gewichtsteile Polyetherol, mit einer OHZ von ~ 160 mgKOH/g hergestellt durch Polyaddition von Propylenoxid an Trimethylolpropan
5 Gewichtsteile Polyetherol, bestehend aus dem Ether von Ethylenglykol und Ethylenoxid mit einer Hydroxylfunktionalität von 2 und einer Hydroxylzahl von 200 mg KOH/g
25 Gewichtsteile Flammschutzmittel Trischlorisopropylphosphat (TCPP)
2,5 Gewichtsteile Stabilisator Niax Silicone L 6635 (siliconhaltiger Stabilisator)
7,5 Gewichtsteile Pentan S 80:20
2,0 Gewichtsteile Wasser
1,5 Gewichtsteile Kaliumacetat (47 Gew.-% in Ethylenglykol)
0,6 Gewichtsteile einer 1:1-Mischung aus Bis(2-dimethylaminoethyl)ether und Tetramethylhexandiamin.

### Isocyanatkomponente:

190 Gewichtsteile Polymer-MDI (Lupranat® M50 der BASF SE, Ludwigshafen, DE)

Die Einstellung der Rohdichte auf 41 +/- 1 g/L erfolgte über den Pentangehalt, die Abbindezeit wurde mittels Variation des Anteils der 1:1-Mischung aus Bis(2-dimethylaminoethyl)ether und Tetramethylhexandiamin auf 49 +/- 1 s eingestellt.

Die Komponenten A und B wurden wie angegeben miteinander verschäumt. Die Ergebnisse des Bolzentests und die Flammhöhen sind in Tabelle 3 wiedergegeben.

**Tabelle 3**

| | Vergleichsbeispiel 8 | Beispiel 5 | Beispiel 6 |
|---|---|---|---|
| Polyesterpolyol aus: | Vergleichsbeispiel 2 | Beispiel 1 | Beispiel 2 |
| Bolzentest [N] nach 3 min. | 53 | 61 | 63 |
| Bolzentest [N] nach 5 min. | 92 | 101 | 103 |
| Flammhöhe [cm] | 11 | 7 | 10 |

Wie Tabelle 3 entnommen werden kann, weisen die nach dem erfindungsgemäßen Verfahren hergestellten Polyurethan-Hartschaumstoffe ein verbessertes Aushärteverhalten und ein verbessertes Brandverhalten auf.

### Vergleichsbeispiel 9 und Beispiel 7

Zusätzlich wurden Sandwichelemente nach dem Doppelbandverfahren hergestellt. Die Rohdichte wurde dabei durch Anheben des Wassergehalts auf 2,6 Teile anstelle von 2 Teilen sowie Verwendung von 11 Teilen Pentan anstelle von 7,5 Teilen auf 30 +/- 1 g/L eingestellt. Die Abbindezeit wurde ferner durch Variation des Anteils der 1:1-Mischung aus Bis(2-dimethylaminoethyl)ether und Tetramethylhexandiamin auf 49 +/- 1 s eingestellt.

Die Doppelbandversuche wurden unter Verwendung des Dimethylterephthalatbasierten Vergleichsesters gemäß Vergleichsbeispiel 3 und des Esters gemäß Beispiel 1 durchgeführt. Die Oberflächenbeurteilung und die Verarbeitbarkeit wurden wie nachstehend beschrieben bestimmt.

### Bestimmung der Oberflächendefekte:

Die Prüfkörper für die Beurteilung der Häufigkeit von Oberflächendefekten wurden nach dem Doppelbandverfahren hergestellt.

Die Oberflächendefekte wurden mit dem oben beschriebenen Verfahren bestimmt. Dazu wird eine 20 cm x 30 cm große Schaumprobe wie oben beschrieben vorbehandelt und beleuchtet und anschließend fotografiert. Die Schaumbilder wurden anschließend binarisiert und übereinander gelegt. Die integrierte Fläche der schwarzen Bereiche der Binärbilder wurde in Relation zu der Gesamtfläche der Bilder gesetzt und stellt somit ein Maß für die Häufigkeit von Oberflächendefekten dar.

Des Weiteren erfolgte eine zusätzliche qualitative Beurteilung der Oberflächenbeschaffenheit der Polyisocyanurat-Hartschäume, wobei die Deckschicht von einer 1 m x 2 m großen Schaumprobe entfernt wurde und die Oberflächen bezüglich Oberflächendefekten optisch beurteilt wurden.

### Bestimmung der Verarbeitbarkeit:

Die Verarbeitbarkeit wird bestimmt indem die Schaumbildung bei der Verarbeitung betrachtet wird. Bilden sich dabei große Treibmittelblasen, die an der Schaumoberfläche platzen und diese somit aufreißen lassen, wird dieses als "Abbläser" bezeichnet und das System ist nicht störungsfrei verarbeitbar. Ist dieses Störungsbild nicht zu beobachten, ist die Verarbeitung störungsfrei.

Die Ergebnisse sind in Tabelle 4 zusammengefasst.

**Tabelle 4**

| | Vergleichsbeispiel 9 | Beispiel 7 |
|---|---|---|
| Polyesterpolyol aus: | Vergleichsbeispiel 3 | Beispiel 1 |
| Bodenstörungen [%]/ optische Beurteilung | 16,8 % / schlecht | 4,8 % / gut |
| Verarbeitung | Abbläser | störungsfrei |

Tabelle 4 zeigt, dass die nach dem erfindungsgemäßen Verfahren hergestellten Polyurethan-Hartschaumstoffe einfacher störungsfrei herzustellen sind.

### Vergleichsbeispiele 10 und 11 und Beispiel 8

### Beispiel

### Herstellung von Polyurethan-Hartschaumstoffen (Variante 3):

Weiterhin wurden Prüfplatten nach dem Doppelbandverfahren gemäß folgender Herstellung eines Polyurethan-Hartschaumstoffes (Variante 3) hergestellt.

Die Isocyanate sowie die mit Isocyanat reaktiven Komponenten wurden zusammen mit den Treibmitteln, Katalysatoren und allen weiteren Zusatzstoffen bei einem konstanten Mischungsverhältnis von Polyol zu Isocyanat von 100:170 verschäumt. Dabei wurde jeweils auf eine konstante Abbindezeit von 28 +/- 1 Sekunden sowie eine Gesamtrohdichte von 37 +/- 1 g/L eingestellt.

### Polyolkomponente:

58 Gewichtsteile Polyesterol gemäß Beispielen bzw. Vergleichsbeispielen
10 Gewichtsteile Polyetherol, bestehend aus dem Ether von Ethylenglykol und Ethylenoxid mit einer Hydroxylfunktionalität von 2 und einer Hydroxylzahl von 200 mg KOH/g
30 Gewichtsteile Flammschutzmittel Trischlorisopropylphosphat (TCPP)
2 Gewichtsteile Stabilisator; Tegostab B 8443 (siliconhaltiger Stabilisator)
10 Gewichtsteile n-Pentan
1,6 Gewichtsteile Ameisensäure (85%)
2,0 Gewichtsteile Kaliumformiat (36 Gew.-% in Ethylenglycol)
0,6 Gewichtsteile Bis(2-dimethylaminoethyl)ether (70 Gew.-% in Dipropylenglykol)

### Isocyanatkomponente:

170 Gewichtsteile Polymer-MDI (Lupranat® M50)

Die Einstellung der Rohdichte auf 37 +/- 1 g/L erfolgte über die Anpassung des Pentangehalts, die Abbindezeit wurde mittels Variation des Bis(2-dimethylaminoethyl)ether-Gehalts auf 28 +/- 1 s eingestellt.

Die Komponenten A und B wurden wie angegeben miteinander verschäumt. Die Ergebnisse der Oberflächenbeurteilung und der Verarbeitbarkeit sind in Tabelle 5 zusammengefasst.

**Tabelle 5**

| | Vergleichsbeispiel 10 | Vergleichsbeispiel 11 | Beispiel 8 |
|---|---|---|---|
| Polyesterpolyol aus: | Vergleichsbeispiel 1 | Vergleichsbeispiel 2 | Beispiel 1 |
| Bodenstörungen [%]/ optische Beurteilung | 24,2 % / schlecht | 18,4 % / schlecht | 3,6 % / gut |
| Verarbeitung | Abbläser | Abbläser | störungsfrei |

Tabelle 5 zeigt, dass die nach dem erfindungsgemäßen Verfahren hergestellten Polyisocyanurat-Hartschaumstoffe einfacher störungsfrei herzustellen sind.

## Patentansprüche

1. Polyesterpolyol enthaltend das Veresterungsprodukt von
a) 10 bis 70 Mol-% einer Dicarbonsäurezusammensetzung, enthaltend
a1) von 50 bis 100 Mol-% eines Materials auf Basis von Terephthalsäure, ausgewählt aus Terephthalsäure, Dimethylterephthalat und Polyalkylenterephthalat und deren Gemischen,
a2) 0 bis 50 Mol-% Phthalsäure, Phthtalsäureanhydrid, oder Isophthalsäure,
a3) 0 bis 50 Mol-% einer oder mehrerer Dicarbonsäuren,
b) 2 bis 30 Mol% einer oder mehrerer Fettsäuren und/oder Fettsäurederivate und/oder Benzoesäure,
c) 10 bis 70 Mol-% eines oder mehrerer aliphatischer oder cycloaliphatischer Diole mit 2 bis 18 C-Atomen oder Alkoxylate derselben,
d) 2 bis 50 Mol-% eines höherfunktionellen Polyols, ausgewählt aus der Gruppe bestehend aus Glycerin, alkoxyliertem Glycerin, Trimethylolpropan, alkoxyliertem Trimethylolpropan, Pentaerythritol und alkoxyliertem Pentaeryth ritol,
wobei pro kg Polyesterpolyol mindestens 800 mmol an Polyolen d) mit einer OH-Funktionalität von ≥ 2,9 umgesetzt werden.

2. Polyesterpolyol nach Anspruch 1, **dadurch gekennzeichnet, dass** die Dicarbonsäurezusammensetzung a) mehr als 75 Mol-% des Materials auf Basis von Terephthalsäure a1) enthält.

3. Polyesterpolyol nach Anspruch 1 oder 2, **dadurch gekennzeichnet, dass** das aliphatische oder cycloaliphatische Diol c) ausgewählt ist aus der Gruppe bestehend aus Ethylenglykol, Diethylenglykol, Propylenglykol, 1,3-Propandiol, 1,4-Butandiol, 1,5-Pentandiol, 1,6-Hexandiol, 2-Methyl-1,3-propandiol und 3-Methyl-1,5-pentandiol und Alkoxylaten derselben.

4. Polyesterpolyol nach Anspruch 3, **dadurch gekennzeichnet, dass** das aliphatische Diol Diethylenglykol ist.

5. Polyesterpolyol nach einem der Ansprüche 1 bis 4, **dadurch gekennzeichnet, dass** die Fettsäure oder das Fettsäurederivat b2) eine Fettsäure oder ein Fettsäurederivat auf Basis nachwachsender Rohstoffe ist und ausgewählt ist aus der Gruppe bestehend aus Castoröl, Polyhydroxyfettsäuren, Ricinolsäure, Hydroxylmodifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Hydroxyl-modifizierten Fettsäuren und Fettsäureestern basierend auf Miyristoleinsäure, Palmitoleinsäure, Ölsäure, Vaccensäure, Petroselinsäure, Gadoleinsäure, Erukasäure, Nervonsäure, Linolsäure, α- und γ-Linolensäure, Stearidonsäure, Arachidonsäure, Timnodonsäure, Clupanodonsäure und Cervonsäure.

6. Verfahren zur Herstellung von Polyurethanhartschaumstoffen durch Umsetzung von
A) organischen und/oder modifizierten organischen Di- und/oder Polyisocyanaten mit
B) Polyesterpolyolen, wie sie in Anspruch 1 definiert sind, wobei die Komponente B) bis zu 50 Gew.-% weitere Polyesterpolyole aufweisen kann,
C) gegebenenfalls Polyetherolen und/oder weitere Verbindungen mit mindestens zwei gegenüber Isocyanaten reaktiven Gruppen und gegebenenfalls Kettenverlängerungs- und/oder Vernetzungsmittel,
D) Treibmitteln,
E) Katalysatoren, sowie gegebenenfalls
F) weiteren Hilfsmitteln und/oder Zusatzstoffen,
G) Flammschutzmitteln.

7. Polyurethanhartschaumstoffe, erhältlich nach dem Verfahren gemäß Anspruch 6.

8. Verwendung von Polyesterpolyolen nach einem der Ansprüche 1 bis 5 zur Herstellung von Polyurethanhartschaumstoffen.

## Claims

1. A polyester polyol comprising the esterification product of
a) from 10 to 70 mol% of a dicarboxylic acid composition comprising
a1) from 50 to 100 mol% of a material based on terephthalic acid, selected from among terephthalic acid, dimethyl terephthalate, polyalkylene terephthalate and mixtures thereof,
a2) from 0 to 50 mol% of phthalic acid, phthalic anhydride or isophthalic acid,
a3) from 0 to 50 mol% of one or more dicarboxylic acids,
b) from 2 to 30 mol% of one or more fatty acids and/or fatty acid derivatives and/or benzoic acid,
c) from 10 to 70 mol% of one or more aliphatic or cycloaliphatic diols having from 2 to 18 carbon atoms or alkoxylates thereof,
d) from 2 to 50 mol% of a higher-functional polyol selected from the group consisting of glycerol, alkoxylated glycerol, trimethylolpropane, alkoxylated trimethylolpropane, pentaerythritol and alkoxylated pentaerythritol, wherein at least 800 mmol of polyols d) having an OH functionality of ≥ 2.9 are reacted per kg of polyester polyol.

2. The polyester polyol according to claim 1, wherein the dicarboxylic acid composition a) comprises more than 75 mol% of the material based on terephthalic acid a1).

3. The polyester polyol according to claim 1 or 2, wherein the aliphatic or cycloaliphatic diol c) is selected from the group consisting of ethylene glycol, diethylene glycol, propylene glycol, 1,3-propanediol, 1,4-butanediol, 1,5-pentanediol, 1,6-hexanediol, 2-methyl-1,3-propanediol and 3-methyl-1,5-pentanediol and alkoxylates thereof.

4. The polyester polyol according to claim 3, wherein the aliphatic diol is diethylene glycol.

5. The polyester polyol according to any of claims 1 to 4, wherein the fatty acid or the fatty acid derivative b2) is a fatty acid or a fatty acid derivative based on renewable raw materials and is selected from the group consisting of castor oil, polyhydroxy fatty acids, ricinoleic acid, hydroxyl-modified oils, grapeseed oil, black cumin oil, pumpkin kernel oil, borage seed oil, soybean oil, wheat germ oil, rapeseed oil, sunflower oil, peanut oil, apricot kernel oil, pistachio oil, almond oil, olive oil, macadamia nut oil, avocado oil, sea buckthorn oil, sesame oil, hemp oil, hazelnut oil, primula oil, wild rose oil, safflower oil, walnut oil, hydroxyl-modified fatty acids and fatty acid esters based on myristoleic acid, palmitoleic acid, oleic acid, vaccenic acid, petroselic acid, gadoleic acid, erucic acid, nervonic acid, linoleic acid, α- and γ-linolenic acid, stearidonic acid, arachidonic acid, timnodonic acid, clupanodonic acid and cervonic acid.

6. A process for producing rigid polyurethane foams by reacting
A) organic and/or modified organic diisocyanates and/or polyisocyanates with
B) polyester polyols as defined in claim 1, with the component B) being able to comprise up to 50% by weight of further polyester polyols,
C) optionally, polyetherols and/or further compounds having at least two groups which are reactive toward isocyanates and, optionally, chain extenders and/or crosslinkers,
D) blowing agents,
E) catalysts and, optionally,
F) further auxiliaries and/or additives,
G) flame retardants.

7. A rigid polyurethane foam which can be obtained by the process according to claim 6.

8. The use of polyester polyols according to any of claims 1 to 5 for producing rigid polyurethane foams.

## Revendications

1. Polyesterpolyol contenant le produit d'estérification de
a) 10 à 70% en mole d'une composition d'acide dicarboxylique, contenant
a1) 50 à 100% en mole d'un matériau à base d'acide téréphtalique, choisi parmi l'acide téréphtalique, le téréphtalate de diméthyle et le poly(téréphtalate d'alkylène) et leurs mélanges,
a2) 0 à 50% en mole d'acide phtalique, d'anhydride de l'acide phtalique ou d'acide isophtalique,
a3) 0 à 50% en mole d'un ou de plusieurs acides dicarboxyliques,
b) 2 à 30% en mole d'un ou de plusieurs acides gras et/ou de dérivés d'acides gras et/ou d'acide benzoïque,
c) 10 à 70% en mole d'un ou de plusieurs diols aliphatiques ou cycloaliphatiques comprenant 2 à 18 atomes de carbone ou des alcoxylates de ceux-ci,
d) 2 à 50% en mole d'un polyol à fonctionnalité supérieure, choisi dans le groupe constitué par le glycérol, le glycérol alcoxylé, le triméthylolpropane, le triméthylolpropane alcoxylé, le pentaérythritol et le pentaérythritol alcoxylé, au moins 800 mmoles de polyols d) présentant une fonctionnalité OH ≥ 2,9 étant transformées par kg de polyesterpolyol.

2. Polyesterpolyol selon la revendication 1, **caractérisé en ce que** la composition d'acide dicarboxylique a) contient plus de 75% en mole du matériau à base d'acide téréphtalique a1).

3. Polyesterpolyol selon la revendication 1 ou 2, **caractérisé en ce que** le diol aliphatique ou cycloaliphatique c) est choisi dans le groupe constitué par l'éthylèneglycol, le diéthylèneglycol, le propylèneglycol, le 1,3-propanediol, le 1,4-butanediol, le 1,5-pentanediol, le 1,6-hexanediol, le 2-méthyl-1,3-propanediol et le 3-méthyl-1,5-pentanediol et leurs alcoxylates.

4. Polyesterpolyol selon la revendication 3, **caractérisé en ce que** le diol aliphatique est le diéthylèneglycol.

5. Polyesterpolyol selon l'une quelconque des revendications 1 à 4, **caractérisé en ce que** l'acide gras ou le dérivé d'acide gras b2) est un acide gras ou un dérivé d'acide gras à base de matières premières renouvelables et est choisi dans le groupe constitué par l'huile de ricin, les acides gras polyhydroxy, l'acide ricinoléique, les huiles modifiées par hydroxyle, l'huile de pépin de raisin, l'huile de carvi noir, l'huile de pépin de courge, l'huile de graines de bourrache, l'huile de graines de soja, l'huile de graines de blé, l'huile de colza, l'huile de graines de tournesol, l'huile d'arachide, l'huile de noyau d'abricot, l'huile de pistache, l'huile d'amande, l'huile d'olive, l'huile de noix de macadamia, l'huile d'avocat, l'huile d'argousier, l'huile de sésame, l'huile de chanvre, l'huile de noisette, l'huile de primevère, l'huile de rose sauvage, l'huile de chardon, l'huile de noix, les acides gras modifiés par hydroxyle et les esters d'acides gras à base d'acide myristoléique, palmitoléique, oléique, vaccénique, pétrosélénique, gadoléique, érucasique, nervonique, linoléique, α-linolénique et γ-linolénique, stéaridonique, arachidonique, timnodonique, clupanodonique et cervonique.

6. Procédé pour la production de mousses dures de polyuréthane par transformation
A) de diisocyanates et/ou polyisocyanates organiques et/ou organiques modifiés et
B) de polyesterpolyols, tels qu'ils sont définis dans la revendication 1, le composant B) pouvant présenter jusqu'à 50% en poids d'autres polyesterpolyols,
C) le cas échéant de polyétherols et/ou d'autres composés présentant au moins deux groupes réactifs par rapport aux isocyanates et le cas échéant des agents d'allongement de chaîne et/ou de réticulation,
D) d'agents gonflants,
E) de catalyseurs ainsi que le cas échéant
F) d'autres adjuvants et/ou additifs,
G) d'agents ignifuges.

7. Mousses dures de polyuréthane pouvant être obtenues selon le procédé selon la revendication 6.

8. Utilisation des polyesterpolyols selon l'une quelconque des revendications 1 à 5 pour la production de mousses dures de polyuréthane.
